# EUROPEAN PATENT SPECIFICATION

(11) **EP 1 233 577 B1**
(45) Date of publication and mention of the grant of the patent: **05.07.2006**
(21) Application number: 02003523.4
(22) Date of filing: 15.02.2002
(51) Int. Cl.: H04L 12/413, H04L 12/46

(54) **A circuit module for interconnection between local networks in a distributed electronic system for motor vehicles**
Schaltungsmodul zur Verbindung zwischen lokalen Netzwerken in einem verteilten elektronischen System für Kraftfahrzeuge
Module comportant un circuit pour l'interconnexion entre des réseaux locaux dans un systeme électronique reparti pour véhicules automobiles

(30) Priority: 20.02.2001 IT TO20010151
(43) Date of publication of application: 21.08.2002
(73) Proprietor: MAGNETI MARELLI SISTEMI ELETTRONICI S.p.A., 20011 Corbetta (Milano) (IT)
(72) Inventor: Borin, Andrea, 29015 Castel San Giovanni, (Piacenza) (IT); Mortara, Piero, 10020 Baldissero Torinese, (Torino) (IT)
(74) Representative: Quinterno, Giuseppe

(56) References cited:
- US-A- 5 633 865
- EKIZ ET AL: "Performance Analysis of a CAN/CAN Bridge" PROCEEDINGS OF THE INTERNATIONAL CONFERENCE ON NETWORK PROTOCOLS, XX, XX, 29 October 1996 (1996-10-29), pages 181-188, XP002104040

## Description

The present invention relates to a circuit module for interconnection between local networks of an on-board electronic-control system for motor vehicles.

Ever greater numbers of electronic-control units are fitted in motor vehicles and interconnected by serial communication networks which use specific communication protocols. The configuration which has become established as standard in the field for connections between distributed control units for multiplex applications between on-board electronic devices (such as, for example, the control of headlights, seat-adjustment, electric windows, rear-view mirrors, etc.) and for on-board mobile communication systems is referred to by the acronym CAN (Controller Area Network).

The configuration of a CAN network is such that a linear transmission bus interconnects several control units which can access the bus with priority determined by the identifier of the message contained in the arbitration field which is present in the frame of the signal transmitted. A network of this type operates in accordance with a so-called multi-master principle. Typical data-transmission rates are between 20 kbit/s and 1 Mbit/s.

The format of the frame of a signal transmitted on a CAN network is well known to a person skilled in the art and will not be described in detail herein.

Various on-board devices are controlled by associated driver circuits connected to a respective control unit.

Recently, in the light of the increasing use of electronics also in the improved control of passenger-compartment or bodywork functions, the solution of interconnecting several driver circuits which cooperate to control the on-board devices of a specific area or which are intended for a specific function of the vehicle, by means of a single local interconnection network (LIN, Local Interconnect Network) is becoming established. This network advantageously has a low-rate serial transmission protocol (at most 20 kbit/s) of the master/slave type in which, for each section of the network, a single node can operate as the master node and there may be up to 16 slave nodes.

US-A-5 633 865 discloses an apparatus for transferring packets between local area network however the teaching of this document does not allow to cope with the special features of CAN and LIN.

The aim of the present invention is to provide a module for interconnection between a CAN network and a LIN network of an on-board electronic-control system for motor vehicles which permits bidirectional transfer of data between the networks.

According to the present invention, this aim is achieved by means of an interconnection module having the characteristics recited in Claim 1.

Particular characteristics of the invention are defined in the dependent claims.

A further subject of the invention is an electronic system for controlling on-board devices for motor vehicles having the characteristics defined in Claim 8.

With the use of the solution of the invention, the overall costs of the on-board electronic-control system are advantageously reduced, particularly in the case of a multiplex system for the control of passenger-compartment and bodywork functions.

Further characteristics and advantages of the invention will be explained in greater detail in the following detailed description of an embodiment thereof, given by way of non-limiting example, with reference to the appended drawings, in which:
Figure 1 is a simplified block circuit diagram of an on-board electronic-control system for motor vehicles, according to the invention, and
Figure 2 is a schematic representation of the conversion operation between the signal frames relating to two different transmission protocols, by the module subject of the invention.

In an on-board electronic-control system for motor vehicles, a main serial communication network for the connection of a plurality of electronic-control units M is indicated CAN. In this network, the units operate in a multi-master mode and communicate with one another with the use of a respective first transmission protocol.

A peripheral network or local serial interconnection network for the connection of a plurality of circuits S for driving devices on board a motor vehicle, on the other hand, is indicated LIN.

The driver circuits S operate as slave nodes of the network LIN and use a respective second transmission protocol.

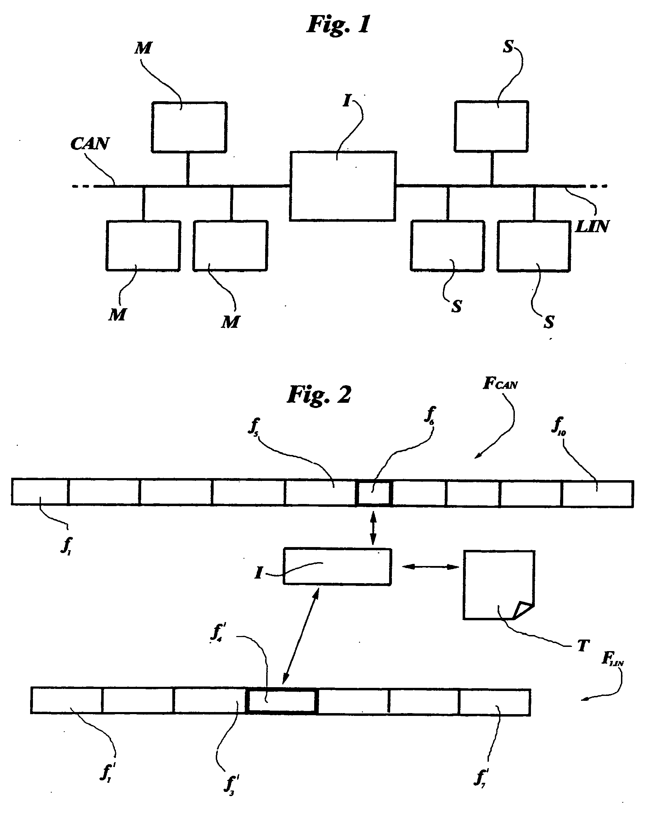

The signals or data routed on a network are organized in frames, indicated F_{CAN} and F_{LIN}, respectively in Figure 2, each comprising a plurality of information elements or fields fᵢ, fᵢ' (where i = 1, 2, ...) arranged in a predetermined order, in dependence on the transmission protocol used. In the embodiment described, the elements indicated fᵢ' of the frame F_{LIN} correspond to some of the elements indicated fᵢ of the frame F_{CAN} but occupy different positions in the respective frames.

An interconnection circuit module I is interposed between the main network CAN and the peripheral network LIN and is arranged to operate as a node of the CAN network and as the master node on the LIN network.

The interconnection module I comprises an electronic signal-processing unit, such as a programmable state machine or a dedicated microcontroller, which can control the conversion between the frames of the signals transmitted by a control unit M to a driver circuit S and *vice versa.*

The processing unit comprises first memory circuits for the temporary storage of the elements of information of the frame of a signal received from a network and a synchronizing circuit arranged to control the transmission of the frame of a signal from the memory circuits to a network, in synchronous manner.

A second memory circuit configured as a reference table T is connected to the processing unit and can store the rules for the interpretation of the frames of the signals transmitted on each network in the form of indications of correlation between the arrangement of the elements of information fᵢ in one frame and the arrangement of the same elements in the other frame (see the schematic representation of Figure 2). The table T contains all of the elements required by the state machine or by the microcontroller to maintain the necessary synchronizations between the data received from one network and transmitted on the other.

The table T is also arranged to receive the above-mentioned interpretation rules by means of the main serial communication network CAN, permitting complete reconfigurability of the module I.

The processing unit is arranged to break up the frame of a signal received from one network into a plurality of information elements fᵢ and to assemble this plurality of elements into a different signal frame for transmission to the other network. The interconnection module I operates as a node of the CAN network and as the master node on the LIN network.

The data contained in an individual frame F_{CAN} (F_{LIN}) and received by the control units of the network CAN (by the driver circuits of the network LIN) may be reassembled into one or more frames F_{LIN} (F_{CAN}) according to the LIN (CAN) protocol. The assembly and breaking-up of the frames F_{CAN,} F_{LIN} is performed by means of the reference table T.

The ability to program and reconfigure the table T entirely makes the system very flexible.

The solution according to the invention advantageously enables individualized devices to be produced from general-purpose integrated circuits which can be configured by the CAN network and can thus potentially be used by different motor-vehicle manufacturers.

It will be clear to a person skilled in the art that the solution described also applies to more complex systems in which the module I enables n CAN networks to be connected to m LIN networks.

Naturally, the principle of the invention remaining the same, the forms of embodiment and details of construction may be varied widely with respect to those described and illustrated purely by way of non-limiting example, without thereby departing from the scope of protection of the present invention as defined by the appended claims.

## Claims

1. A circuit module (I) for interconnection between local networks (CAN, LIN) of an on-board electronic-control system for motor vehicles, for controlling passenger-compartment and bodywork functions, the system comprising
a plurality of electronic-control units (M) connected to one another by means of at least one main serial communication network (CAN) using a first transmission protocol, and
a plurality of circuits (S) for driving on-board devices, connected to a node of the main network (CAN) by means of at least one peripheral serial communication network (LIN) in which they operate as slave nodes, said circuits (S) using a second transmission protocol,
in which the circuit module (I) is arranged to interconnect the peripheral serial communication network (LIN) and the main serial communication network (CAN), operating as a node of the main network (CAN) and as the master node of the peripheral network (LIN), and comprises an electronic signal-processing unit adapted to control conversion between the signal frames (F_{CAN}, F_{LIN}) relating to the first and second transmission protocols to permit the transfer of data between control units (M) and driver circuits (S), the unit being arranged to break up the frame (F_{CAN}; F_{LIN}) of a signal received from a network (CAN; LIN) into a plurality of information elements (fᵢ) and to assemble a plurality of information elements (fᵢ') into a different signal frame (F_{LIN}; F_{CAN}) for transmission to the other network (LIN; CAN).

2. A module according to Claim 1, in which the processing unit comprises first memory means for the temporary storage of the information elements (fᵢ) of the frame (F_{CAN}, F_{LIN}) of a signal received.

3. A module according to Claim 2, in which the processing unit comprises a synchronizing circuit arranged to control the transmission of the frame (F_{CAN}, F_{LIN}) of a signal on any of the networks (CAN, LIN), in synchronous manner.

4. A module according to any one of the preceding claims, in which the processing unit is a state machine.

5. A module according to any one of Claims 1 to 3, in which the processing unit is a dedicated microcontroller.

6. A module according to any one of the preceding claims, in which the processing unit is connected to second memory means (T) adapted to store the rules for the interpretation of the communication frames (F_{CAN}, F_{LIN}) of the signals transmitted on the networks (CAN, LIN), in the form of indications of correlation between the arrangement of the information elements (fᵢ) in one frame and the arrangement of corresponding elements (fᵢ') in the other frame.

7. A module according to Claim 6, in which the second memory means (T) are arranged for receiving the interpretation rules by means of the main serial communication network (CAN).

8. An electronic system for controlling on-board devices for motor vehicles adapted for controlling passenger-compartment and bodywork functions, including:
a plurality of electronic-control units (M) connected to one another by means of at least one main serial communication network (CAN) using a first transmission protocol, and
a plurality of circuits (S) for driving on-board devices, connected to a node of the main network (CAN) by means of at least one peripheral serial network (LIN) using a second transmission protocol, in which the circuits (S) operate as slave nodes,
the system being **characterized in that** it comprises a circuit module (I) for interconnection between the networks (CAN, LIN), as defined in Claims 1 to 7.

## Patentansprüche

1. Schaltkreismodul (I) für die Verbindung zwischen lokalen Netzwerken (CAN, LIN) eines fahrzeugeigenen elektronischen Steuersystems für Kraftfahrzeuge, um Funktionen des Fahrgastraums und der Karosserie zu steuern, wobei das System enthält:
eine Vielzahl von elektronischen Steuereinheiten (M), die über zumindest ein serielles Haupt-Kommunikationsnetzwerk (CAN) miteinander verbunden sind, das ein erstes Übertragungsprotokoll verwendet, und
eine Vielzahl von Stufen (S) zum Ansteuern von fahrzeugeigenen Einrichtungen, die mit einem Knoten des Hauptnetzwerks (CAN) über zumindest ein serielles peripheres Kommunikationsnetzwerk (LIN) verbunden sind, in dem sie als Slave-Knoten arbeiten, wobei die Stufen (S) ein zweites Übertragungsprotokoll verwenden,
wobei das Schaltkreismodul (I) so aufgebaut ist, um das periphere serielle Kommunikationsnetzwerk (LIN) und das serielle Haupt-Kommunikationsnetzwerk (CAN) zu verbinden,
wobei das Modul als ein Knoten des Hauptnetzwerks (CAN) und als der Master-Knoten des peripheren Netzwerks (LIN) arbeitet und eine elektronische Signal-Prozessorstufe enthält, die so aufgebaut ist, dass sie die Konvertierung zwischen den Signal-Frames (F_{CAN}, F_{LIN}) steuert, die sich auf das erste und das zweite Übertragungsprotokoll beziehen, um die Übertragung von Daten zwischen Steuereinheiten (M) und Treiberstufen (S) zu ermöglichen,
wobei die Prozessorstufe so aufgebaut ist, dass sie den Frame (F_{CAN}; F_{LIN}) eines Signals, das von einem Netzwerk (CAN; LIN) empfangen wurde, in eine Vielzahl von Informationselementen (fᵢ) aufbricht und eine Vielzahl von Informationselementen (fᵢ') in einen unterschiedlichen Signal-Frame (F_{LIN}; F_{CAN}) zusammensetzt, um ihn zum anderen Netzwerk (LIN; CAN) zu übertragen.

2. Modul gemäß Anspruch 1, wobei die Prozessorstufe eine erste Speicherstufe enthält, um die Informationselemente (fᵢ) des Frames (F_{CAN}; F_{LIN}) eines empfangenen Signals temporär zu speichern.

3. Modul gemäß Anspruch 2, wobei die Prozessorstufe eine Synchronisierstufe enthält, die so aufgebaut ist, um die Übertragung des Frames (F_{CAN}, F_{LIN}) eines Signals in irgendeinem der Netzwerke (CAN, LIN) synchronisiert zu steuern.

4. Modul gemäß irgendeinem der bisherigen Ansprüche, wobei die Prozessorstufe eine Zustandsmaschine ist.

5. Modul gemäß irgendeinem der Ansprüche 1 bis 3, wobei die Prozessorstufe ein dezidierter Mikrokontroller ist.

6. Modul gemäß irgendeinem der bisherigen Ansprüche, wobei die Prozessorstufe mit einer zweite Speicherstufe (T) verbunden ist, die dazu dient, um die Regeln für die Interpretation der Kommunikations-Frames (F_{CAN}, F_{LIN}) der Signale, die auf den Netzwerken (CAN, LIN) übertragen werden, in Form von Korrelationsanzeigen zwischen der Anordnung der Informationselemente (fᵢ) in einem Frame und der Anordnung von entsprechenden Elementen (fᵢ') im anderen Frame zu speichern.

7. Modul gemäß Anspruch 6, wobei die zweite Speicherstufe (T) so aufgebaut ist, um die Interpretationsregeln über das serielle Haupt-Kommunikationsnetzwerk (CAN) zu empfangen.

8. Elektronisches Steuersystem zum Steuern von fahrzeugeigenen Einrichtungen für Kraftfahrzeuge, das aufgebaut ist, um Funktionen des Fahrgastraums und der Karosserie zu steuern, wobei das System aufweist:
eine Vielzahl von elektronischen Steuereinheiten (M), die über zumindest ein serielles Haupt-Kommunikationsnetzwerk (CAN) miteinander verbunden sind, das ein erstes Übertragungsprotokoll verwendet, und
eine Vielzahl von Stufen (S) für die Ansteuerung von fahrzeugeigenen Einrichtungen, die mit einem Knoten des Hauptnetzwerks (CAN) über zumindest ein peripheres serielles Netzwerk (LIN) verbunden sind, das ein zweites Übertragungsprotokoll verwendet, wobei die Stufen (S) als Slave-Knoten arbeiten,
wobei das System **dadurch gekennzeichnet ist, dass** es ein Schaltkreismodul (I) für eine Verbindung zwischen den Netzwerken (CAN, LIN) gemäß Anspruch 1 bis 7 enthält.

## Revendications

1. Module de circuits (I) pour une interconnexion entre des réseaux locaux (CAN, LIN) d'un système de commande électronique embarqué pour véhicules automobiles, pour commander des fonctions d'habitacle et de carrosserie, le système comprenant
une pluralité d'unités de commande électroniques (M) connectées les unes aux autres au moyen d'au moins un réseau de communication série principal (CAN) utilisant un premier protocole de transmission, et
une pluralité de circuits (S) pour commander des dispositifs embarqués, connectés à un noeud du réseau principal (CAN) au moyen d'au moins un réseau de communication série périphérique (LIN) dans lequel ils fonctionnent en tant que noeuds esclaves, lesdits circuits (S) utilisant un deuxième protocole de transmission,
dans lequel le module de circuits (I) est agencé pour interconnecter le réseau de communication série périphérique (LIN) et le réseau de communication série principal (CAN), fonctionnant en tant que noeud du réseau principal (CAN) et en tant que noeud maître du réseau périphérique (LIN), et comprend une unité de traitement de signal électronique adaptée pour commander une conversion entre les trames de signal (F_{CAN}, F_{LIN}) concernant les premier et deuxième protocoles de transmission pour permettre le transfert de données entre des unités de commande (M) et des circuits de commande (S), l'unité étant agencée pour séparer la trame (F_{CAN} ; F_{LIN}) d'un signal reçu d'un réseau (CAN ; LIN) en une pluralité d'éléments d'informations (fᵢ) et pour assembler une pluralité d'éléments d'informations (fᵢ') en une trame de signal (F_{LIN} ; F_{CAN}) différente pour une transmission à l'autre réseau (LIN ; CAN).

2. Module selon la revendication 1, dans lequel l'unité de traitement comprend des premiers moyens de mémorisation pour la mémorisation temporaire des éléments d'informations (fᵢ) de la trame (F_{CAN}, F_{LIN}) d'un signal reçu.

3. Module selon la revendication 2, dans lequel l'unité de traitement comprend un circuit de synchronisation agencé pour commander la transmission de la trame (F_{CAN}, F_{LIN}) d'un signal sur l'un quelconque des réseaux (CAN, LIN), en synchronisation.

4. Module selon l'une quelconque des revendications précédentes, dans lequel l'unité de traitement est une machine à états.

5. Module selon l'une quelconque des revendications 1 à 3, dans lequel l'unité de traitement est un microcontrôleur dédié.

6. Module selon l'une quelconque des revendications précédentes, dans lequel l'unité de traitement est connectée à des deuxièmes moyens de mémorisation (T) adaptés pour mémoriser les règles pour l'interprétation des trames de communication (F_{CAN}, F_{LIN}) des signaux transmis sur les réseaux (CAN, LIN), sous la forme d'indications de corrélation entre l'agencement des éléments d'informations (fᵢ) dans une trame et l'agencement d'éléments correspondants (fᵢ') dans l'autre trame.

7. Module selon la revendication 6, dans lequel les deuxièmes moyens de mémorisation (T) sont agencés pour recevoir les règles d'interprétation au moyen du réseau de communication série principal (CAN).

8. Système électronique pour commander des dispositifs embarqués pour véhicules automobiles adapté pour commander des fonctions d'habitacle et de carrosserie, comprenant :
une pluralité d'unités de commande électroniques (M) connectées les unes aux autres au moyen d'au moins un réseau de communication série principal (CAN) utilisant un premier protocole de transmission, et
une pluralité de circuits (S) pour commander des dispositifs embarqués, connectés à un noeud du réseau principal (CAN) au moyen d'au moins un réseau série périphérique (LIN) utilisant un deuxième protocole de transmission, dans lequel les circuits (S) fonctionnent en tant que noeuds esclaves,
le système étant **caractérisé en ce qu'**il comprend un module de circuits (I) pour une interconnexion entre les réseaux (CAN, LIN), tel que défini dans les revendications 1 à 7.
